Europäisches Patentamt

European Patent Office

Office européen des brevets

(19)

(11) Numéro de publication : **0 062 345**
**B1**

(12)

# FASCICULE DE BREVET EUROPÉEN

(45) Date de publication du fascicule du brevet :
21.11.85

(21) Numéro de dépôt : 82102934.5

(22) Date de dépôt : 06.04.82

(51) Int. Cl.⁴ : **G 02 B 6/36,** G 02 B 6/44,
H 02 B 15/00

(54) Procédé de jonction de câbles sous-marins à fibres optiques.

(30) Priorité : 08.04.81 FR 8107057

(43) Date de publication de la demande :
13.10.82 Bulletin 82/41

(45) Mention de la délivrance du brevet :
21.11.85 Bulletin 85/47

(84) Etats contractants désignés :
DE FR GB

(56) Documents cités :
DE-C- 438 041
FR-A- 2 401 434
FR-A- 2 435 051
US-A- 2 043 346
US-A- 4 171 867

(73) Titulaire : **LES CABLES DE LYON Société anonyme
dite:**
**170 quai de Clichy**
**F-92111 Clichy Cedex (FR)**

(72) Inventeur : **Guazzo, Lucien**
**77 rue de la Paix**
**F-62100 Calais (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

La présente invention concerne un procédé de jonction des extrémités de deux câbles sous-marins à fibres optiques.

On sait que les câbles sous-marins comportent principalement une âme renfermant au moins une fibre optique, âme entourée d'un réseau de fils dénommé voûte porteuse et assurant la tenue mécanique de l'ensemble. Ces câbles sont immergés, parfois à de grandes profondeurs et sont donc soumis à des pressions hydrostatiques élevées.

Il peut donc se produire parfois une rupture du câble et il est donc nécessaire de réaliser le raccordement ou la jonction des deux tronçons afin de rétablir la continuité de l'ensemble. Il peut également être nécessaire de relier deux câbles mutuellement. Les procédés connus ne permettent pas d'assurer de façon suffisamment fiable une telle jonction, et c'est donc un but de la présente invention de réaliser de façon pratique une jonction fiable sur des câbles sous-marins à fibres optiques pouvant être immergés à de grandes profondeurs.

L'invention a donc pour objet un procédé de jonction des extrémités de deux câbles sous-marins à fibres optiques, câbles du type comportant chacun une âme dans laquelle est disposée au moins une fibre optique, cette âme étant entourée d'une voûte porteuse formée de brins métalliques, procédé caractérisé par le fait que, pour chaque extrémité de câble, on découpe une certaine longueur de cette voûte porteuse de sorte à dégager une longueur correspondante de chaque fibre optique, on introduit chaque fibre optique dans une ouverture latérale d'une olive, on introduit l'olive dans l'extrémité du câble entre les brins de la voûte porteuse, ladite introduction écartant lesdits brins et permettant ainsi de faire passer chaque fibre optique entre deux brins vers l'extérieur, et pour réaliser la jonction proprement dite, on amène les extrémités des voûtes porteuses sensiblement au contact l'une de l'autre, on les assujettit en les recouvrant par un manchon métallique, on soude lesdites fibres l'une à l'autre puis, tout en tirant légèrement les extrémités des fibres, on enroule hélicoïdalement la surlongueur des fibres autour du manchon.

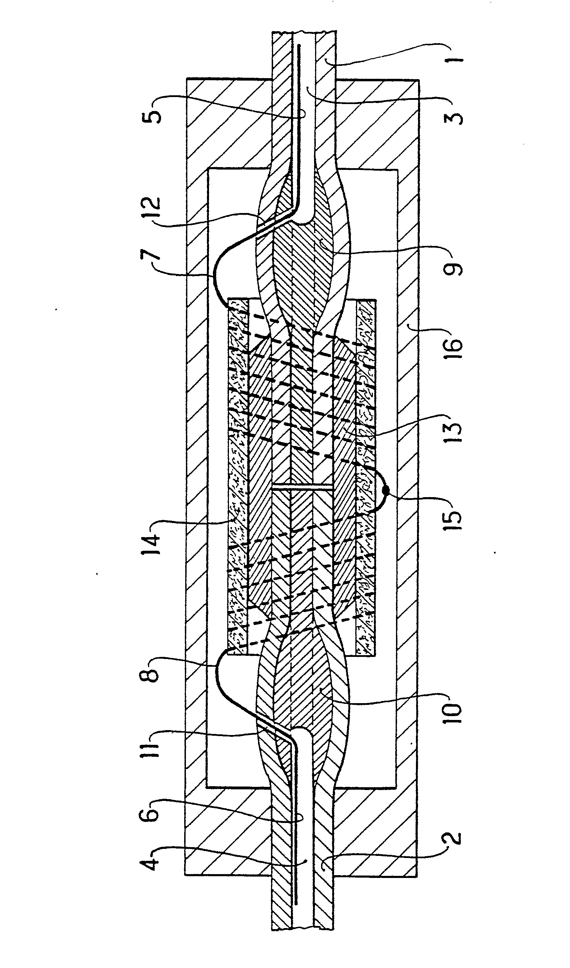

L'invention est décrite ci-après plus en détail à l'aide d'un exemple de mise en œuvre et du dessin qui montre en coupe axiale une telle jonction.

On voit sur la figure unique des brins métalliques de la voûte porteuse 1 de l'un des câbles à raccorder, et les brins de la voûte porteuse 2 de l'autre câble. Ces brins sont enroulés hélicoïdalement.

Les âmes 3, 4 desdits câbles contiennent des fibres optiques dont une seule, 5 et 6 respectivement, a été représentée.

Dans le but de réaliser la jonction, au préalable et pour chaque câble, on décâble la voûte porteuse, on découpe une certaine longueur de cette voûte porteuse de manière à dégager une longueur correspondante 7 et 8 de chaque fibre optique 5, 6. On découpe également l'âme, à l'intérieur de la voûte, sur une longueur égale à la longueur d'une olive. On introduit alors dans chaque extrémité des voûtes porteuses 1 et 2, et entre les brins de ces dernières, une pièce dite « olive », respectivement 9 et 10, chacune d'entr'elles comportant pour chaque fibre optique une ouverture latérale 11, 12 ou « cheminée » dans laquelle les fibres optiques ont été introduites préalablement. L'introduction des olives écartent les brins des voûtes porteuses, on fait donc passer chaque fibre optique entre deux brins.

Puis, après avoir glissé le long d'une extrémité de câble un manchon souple 14 confectionné en une matière souple telle qu'une mousse d'un matériau plastique, on amène les deux tronçons de voûte 1 et 2 au contact l'un de l'autre et on les serre au moyen d'un manchon métallique 13. On ramène le manchon 14 sur le manchon 13. Les fibres optiques 5 et 6 sont alors soudées bout à bout au point 15, puis on tire la surlongueur de fibres et on l'enroule en hélice autour dudit manchon 14.

On a ainsi réalisé la jonction des deux tronçons de câble autour de laquelle on dispose un boîtier de protection 16 apte à résister à la pression hydrostatique lorsque le câble sera à nouveau immergé dans la mer.

L'invention est mise en œuvre dans la réparation des câbles sous-marins et également dans la réalisation de jonction mutuelles de câbles.

Une variante de l'invention peut consister à coller les fibres bout à bout à l'aide de plaquettes comportant des vés d'alignement.

## Revendications

1. Procédé de jonction des extrémités de deux câbles sous-marins à fibres optiques, câbles du type comportant chacun une âme (3, 4) dans laquelle est disposée au moins une fibre optique (5, 6), cette âme (3, 4) étant entourée d'une voûte porteuse (1, 2) formée de brins métalliques, caractérisé par le fait que, pour chaque extrémité de câble, on découpe une certaine longueur de la voûte porteuse de sorte à dégager une longueur correspondante (7, 8) de chaque fibre optique, on introduit chaque fibre optique dans une ouverture latérale (11, 12) d'une olive (9, 10), on introduit l'olive dans l'extrémité du câble entre les brins de la voûte porteuse, ladite introduction écartant lesdits brins et permettant ainsi de faire passer chaque fibre optique entre deux brins vers l'extérieur, et pour réaliser la jonction proprement dite, on amène les extrémités des voûtes porteuses (1, 2) sensiblement au contact l'une de l'autre, on les assujettit en les recouvrant par un manchon métallique (13), on soude lesdites fibres l'une à l'autre puis, tout en tirant légèrement les extrémités des fibres, on enroule hélicoïdalement la surlongueur des fibres autour du manchon.

2. Procédé selon la revendication 1, caractérisé par le fait qu'un manchon (14) est disposé autour du manchon métallique (13), et est confectionné en une matière souple, notamment en une mousse d'un matériau plastique, la surlongueur des fibres étant enroulée hélicoïdalement autour dudit manchon souple (14).

3. Procédé selon l'une des revendications 1 à 2, caractérisé par le fait que l'on dispose un boîtier de protection (16) autour de la jonction ainsi réalisée.

## Claims

1. A method of joining together the ends of optical fibre submarine cables, each of which has a core (3, 4) in which at least one optical fibre (5, 6) is disposed, said core (3, 4) being surrounded by a carrier vault (1, 2) formed by metal strands, characterized in that for each cable end, a given length of said carrier vault is cut off so as to free a corresponding length (7, 8) of each optical fibre, each optical fibre is inserted in a lateral opening (11, 12) of an olive (9, 10), the olive is introduced into the end of the cable between the strands of the carrier vault, said introduction spreading said strands and permitting thus to make each optical fibre pass between two strands to the outside, and for realizing the joining itself, the ends of said carrier vaults (1, 2) are substantially brought into contact each with another, they are connected by covering them with a metal sleeve (13), said fibres are welded to one another, then, while the ends of the fibres are slightly strechted, the excess length of fibres is helically wound around the sleeve.

2. A method according to claim 1, characterized in that a sleeve (14) is disposed around the metal sleeve (13) and is made of a flexible substance, in particular a foam plastic substance, the excess length of the fibres being helically wound around said flexible sleeve (14).

3. A method according to claims 1 to 2, characterized in that a protective housing (16) is disposed around the connection thus formed.

## Patentansprüche

1. Verfahren zur Verbindung der Enden zweier Unterseekabel mit Lichtleitfasern, wobei die Kabel je eine Seele (3, 4) aufweisen, in der mindestens eine Lichtleitfaser (5, 6) angeordnet ist und die von einem Trägergewölbe (1, 2) aus Metalllitzen umgeben ist, dadurch gekennzeichnet, daß man für jedes Kabelende eine gewisse Länge des Trägergewölbes abschneidet, derart, daß eine entsprechende Länge (7, 8) jeder Lichtleitfaser freigelegt wird, daß man jede Lichtleitfaser in eine Seitenöffnung (11, 12) eines olivenförmigen Bauteils (9, 10) einführt, daß man das olivenförmige Bauteil in das Kabelende zwischen die Litzen des Trägergewölbes einführt, wobei durch diese Einführung die Litzen auseinandergeschoben werden und es so möglich wird, jede Lichtleitfaser zwischen zwei Litzen nach außen zu führen, und daß man zur Herstellung der eigentlichen Verbindung die Enden der Trägergewölbe (1, 2) im wesentlichen miteinander in Kontakt bringt, daß man sie aneinanderlegt, indem man sie mit einer Metallhülse (13) umgibt, daß man die Fasern aneinanderschweißt und dann, indem man leicht an den Enden der Fasern zieht, die Überlänge der Fasern spiralförmig um die Hülse windet.

2. Verfahren nach Anspruch 1, dadurch gekennzeichnet, daß eine Hülse (14) um die Metallhülse (13) herum angeordnet ist und aus einem biegsamen Material, insbesondere einem Plastikschaum, hergestellt ist, wobei die Überlänge der Fasern spiralförmig um diese biegsame Hülse (14) herumgewickelt ist.

3. Verfahren nach einem der Ansprüche 1 bis 2, dadurch gekenzeichnet, daß man ein Schutzgehäuse um die so hergestellte Verbindung anordnet.